# EUROPÄISCHE PATENTSCHRIFT

(11) **EP 2 541 054 B1**
(45) Veröffentlichungstag und Bekanntmachung des Hinweises auf die Patenterteilung: **07.06.2017**
(21) Anmeldenummer: 12163861.3
(22) Anmeldetag: 12.04.2012
(51) Int. Cl.: F03D 7/04, F03D 9/00, F03D 80/00, F03D 17/00

(54) **Offshore- Windenergiesystem**
Offshore wind energy system
Système d'énergie éolienne offshore

(30) Priorität: 30.06.2011 DE 102011107629
(43) Veröffentlichungstag der Anmeldung: 02.01.2013
(73) Patentinhaber: innogy SE, 45128 Essen (DE)
(72) Erfinder: Esken, Matthias, 21220 Seevetal (DE); Koch, Dr. Friedrich, 47623 Kevelaer (DE); Froitzheim, Herbert, 41539 Dormagen (DE); Schlüter, Thorsten, 20251 Hamburg (DE)
(74) Vertreter: Cohausz & Florack

(56) Entgegenhaltungen:
- EP-A1- 0 336 036
- WO-A1-2009/003508
- DE-A1-102009 037 523
- DE-U1- 20 001 864

## Beschreibung

Die Erfindung betrifft ein Offshore-Windenergiesystem mit einer ersten Offshore-Windenergieeinrichtung und mindestens einer weiteren Offshore-Windenergieeinrichtung, wobei zur Übertragung eines elektrischen Signals mindestens eine elektrische Verbindung zwischen der ersten Offshore-Windenergieeinrichtung und der weiteren Offshore-Windenergieeinrichtung vorgesehen ist. Die Erfindung betrifft darüber hinaus eine Offshore-Windenergieeinrichtung für dieses Offshore-Windenergiesystem und ein Verfahren zum Detektieren einer fehlerhaften elektrischen Verbindung zwischen einer ersten Offshore-Windenergieeinrichtung und einer weiteren Offshore-Windenergieeinrichtung.

Die Nachfrage nach Energie aus regenerativen Quellen steigt stetig. Eine der zur Verfügung stehenden Ressourcen ist hierbei die Windenergie. Eine Windenergieanlage wandelt die kinetische Energie des Windes mittels eines Rotors und eines Generators in elektrische Energie um.

Um den Energieertrag zu maximieren, kann aus mehreren Windenergieanlagen ein Windenergiesystem gebildet und die Windenergieanlagen können in Gebieten mit hoher Windwahrscheinlichkeit und -intensität aufgestellt werden. Besonders geeignet sind Standorte auf der offenen See, auch Offshore-Gebiete genannt.

Die Anforderungen an Offshore-Windenergiesysteme bzw. Offshore-Windenergieparks unterscheiden sich jedoch deutlich von den Anforderungen an Onshore-Windenergiesysteme. Somit müssen als Windenergieeinrichtungen spezielle Offshore-Windenergieeinrichtungen eingesetzt werden. Insbesondere ist es ein stetiges Anliegen, den aufgrund der speziellen Lage auf See und der damit verbundenen schweren Erreichbarkeit großen Wartungs- und Instandhaltungsaufwand zu reduzieren.

Ein wesentliches Problem bei den Offshore-Windenergiesystemen ist hierbei die Wartung und Überwachung einer elektrischen Verbindung zwischen zwei Offshore-Windenergieeinrichtungen. In der Regel wird als elektrische Verbindung ein Seekabel zur Übertragung der elektrischen Energie zwischen zwei Offshore-Windenergieeinrichtungen eingesetzt. Dieses Seekabel wird von einer Offshore-Windenergieeinrichtung zu einer benachbarten Offshore-Windenergieeinrichtung am oder im Meeresboden verlegt.

Im Gegensatz zu Landkabeln sind Seekabel jedoch besonderen Gefahren ausgesetzt und können leicht beschädigt werden. So ankern immer wieder Schiffe trotz eines Verbots im Gebiet des Offshore-Windenergiesystems. Durch den Anker der Schiffe können die Seekabel jedoch beschädigt werden. Auch kann es passieren, dass ein Seekabel nicht ausreichend im Meeresboden verankert worden ist und im Laufe der Zeit freigespült wird. Um weitere Folgebeschädigungen an den Offshore-Windenergieeinrichtungen zu vermeiden, ist es erforderlich, auch geringe Schäden zeitnah zu erfassen.

Aus dem Stand der Technik sind jedoch lediglich Maßnahmen, wie ein unabhängiger Maximalstromzeitschutz (UMZ-Schutz), bekannt, die keine sichere und zeitnahe Detektion einer fehlerhaften elektrischen Verbindung insbesondere bei geringen Schäden und/oder bei geringen Kurschlussströmen erlauben. Gerade die im Vergleich zu Onshore-Windenergiesystemanschlüssen geringen Kurzschlussströme bereiten bei der Überwachung von elektrischen Verbindungen im Stand der Technik erhebliche Probleme. WO2009003508 zeigt eine Windkraftanlage gemäß dem Stand der Technik. Der Erfindung liegt daher die Aufgabe zugrunde, ein Offshore-Windenergiesystem bereitzustellen, welches in einfacher Weise eine sichere Detektion von defekten elektrischen Verbindungen zwischen zwei Offshore-Windenergieeinrichtungen ermöglicht. Die Aufgabe wird erfindungsgemäß bei einem Offshore-Windenergiesystem gemäß Patentanspruch 1 gelöst. Das Offshore-Windenergiesystem umfasst eine erste Offshore-Windenergieeinrichtung und mindestens eine weitere Offshore-Windenergieeinrichtung, wobei zur Übertragung eines elektrischen Signals mindestens eine elektrische Verbindung zwischen der ersten Offshore-Windenergieeinrichtung und der weiteren Offshore-Windenergieeinrichtung vorgesehen ist, wobei die erste Offshore-Windenergieeinrichtung mindestens eine erste Parameterbestimmungseinrichtung zum Bestimmen von mindestens einem ersten Parameterwert von mindestens einem Parameter des elektrischen Signals aufweist, die weitere Offshore-Windenergieeinrichtung mindestens eine weitere Parameterbestimmungseinrichtung zum Bestimmen von mindestens einem weiteren Parameterwert von dem mindestens einem Parameter des elektrischen Signals aufweist und mindestens eine der Parameterbestimmungseinrichtungen zum Bestimmen einer Differenz zwischen dem ersten Parameterwert und dem weiteren Parameterwert eingerichtet ist.

Im Gegensatz zum Stand der Technik wird erfindungsgemäß eine fehlerhafte elektrische Verbindung zwischen zwei Offshore-Windenergieeinrichtungen dadurch detektiert, dass an beiden Enden der elektrischen Verbindung der jeweilige Wert des gleichen elektrischen Parameters bestimmt und die Differenz bzw. Summe der bestimmten Werte ermittelt wird.

Das Offshore-Windenergiesystem umfasst zumindest zwei elektrisch miteinander verbundene Offshore-Windenergieeinrichtungen. Bei der elektrischen Verbindung kann es sich um ein Kabel, insbesondere ein Seekabel, handeln. Die elektrische Verbindung ist insbesondere zur Übertragung der erzeugten elektrischen Energie vorgesehen. Es versteht sich, dass das Kabel eine ausreichende Strom- und Spannungsfestigkeit zur Übertragung einer bestimmten Energiemenge aufweist.

Jede Offshore-Windenergieeinrichtung kann mindestens eine Parameterbestimmungseinrichtung umfassen. Beispielsweise kann/können eine oder mehrere Messeinrichtung/en zum Messen eines oder mehrerer elektrischer Parameter/s, wie einem Strom und/oder einer Spannung, vorgesehen sein. Es versteht sich, dass ein (zusätzliches) Verarbeitungsmittel zum Ableiten eines elektrischen Parameters aus einem gemessenen Parameter vorgesehen sein kann.

Vorzugsweise kann zumindest jeweils der Stromwert durch die erste bzw. die weitere Parameterbestimmungseinrichtung erfasst werden. Aus den erfassten Stromwerten kann die Differenz bzw. Summe gebildet werden. Beispielsweise kann auch eine Vergleichsoperation durchgeführt werden. Durch die Bestimmung der Differenz zwischen dem von einer Offshore-Windenergieeinrichtung eingespeisten Strom und dem von der weiteren Offshore-Windenergieeinrichtung empfangenen Strom kann in einfacher Weise auf eine defekte elektrische Verbindung geschlossen werden. Beispielsweise liegt eine Beschädigung einer elektrischen Verbindung dann vor, wenn der in die elektrische Verbindung eingespeiste Strom von dem am anderen Ende der elektrischen Verbindung empfangenen Strom abweicht.

Die Bestimmung der Differenz ermöglicht insbesondere auch dann eine sichere und zeitnahe Detektion einer fehlerhaften elektrischen Verbindung, wenn nur geringe Kurzschlussströme auftreten.

Gemäß einer ersten Ausführungsform des Offshore-Windenergiesystems kann mindestens eine Schaltereinrichtung zum Trennen der mindestens einen elektrischen Verbindung vorgesehen sein. Mindestens eine Parameterbestimmungseinrichtung kann zum Vergleichen der bestimmten Differenz mit einer vorgebbaren Differenz eingerichtet sein. Vorzugsweise können sämtliche Parameterbestimmungseinrichtungen zum Bestimmen der Differenz und/oder zum Vergleichen der bestimmten Differenz mit einer vorgebbaren Differenz ausgebildet sein. Die Parameterbestimmungseinrichtung kann ferner eingerichtet sein, bei Überschreiten der vorgebbaren Differenz die mindestens eine Schaltereinrichtung anzusteuern, derart, dass die elektrische Verbindung zwischen der ersten Offshore-Windenergieeinrichtung und der weiteren Offshore-Windenergieeinrichtung getrennt wird. Um Folgebeschädigungen an den Offshore-Windenergieeinrichtungen zu verhindern, kann die beschädigte elektrische Verbindung getrennt, also eine Stromübertragung unterbrochen werden. Vorteilhafterweise kann jeweils eine Schaltereinrichtung an den Enden der elektrischen Verbindung vorgesehen sein. Beispielsweise kann eine Parameterbestimmungseinrichtung beide Schaltereinrichtungen ansteuern. Alternativ kann die Parameterbestimmungseinrichtung der ersten Offshore-Windenergieeinrichtung die Schaltereinrichtung der ersten Offshore-Windenergieeinrichtung ansteuern und die Parameterbestimmungseinrichtung der weiteren Offshore-Windenergieeinrichtung die Schaltereinrichtung der weiteren Offshore-Windenergieeinrichtung ansteuern.

Um die Differenz zumindest der zwei bestimmten Parameterwerte bestimmen zu können, kann gemäß einer bevorzugten Ausführungsform mindestens ein Datenkommunikationskanal zumindest zwischen der ersten Parameterbestimmungseinrichtung und der mindestens einen weiteren Parameterbestimmungseinrichtung vorgesehen sein. Beispielsweise kann ein drahtgebundener oder ein drahtloser Datenkommunikationskanal vorgesehen sein. Bevorzugt können die Parameterbestimmungseinrichtungen geeignete Schnittstellen umfassen. Neben dem mindestens einen bestimmten Parameterwert können weitere Daten, beispielsweise Zustandsdaten der Parameterbestimmungseinrichtung, übertragen werden. Hierzu können auch zusätzliche Kommunikationskanäle bereitgestellt werden. Beispielsweise kann der Ausfall eines Messinstruments oder dergleichen gemeldet werden.

Ferner kann vorgesehen sein, dass die Parameterbestimmungseinrichtung den mindestens einen Parameterwert kontinuierlich bestimmt. Alternativ kann vorgesehen sein, dass der mindestens eine Parameterwert in vorgebbaren Zeitabständen bestimmt wird. Insbesondere kann die Bestimmung der Parameterwerte zwischen den zumindest zwei Parameterbestimmungseinrichtungen synchronisiert sein. Dies erlaubt, dass (nahezu) zeitgleich bestimmte Parameterwerte miteinander verglichen werden können.

Das Offshore-Windenergiesystem kann des Weiteren auch drei oder mehr Offshore-Windenergieeinrichtungen umfassen. Die Offshore-Windenergieeinrichtungen können grundsätzlich in beliebiger Weise miteinander elektrisch verbunden sein. Beispielsweise kann jede Offshore-Windenergieeinrichtung direkt mit sämtlichen anderen Offshore-Windenergieeinrichtungen verbunden sein.

Um jede (direkte) elektrische Verbindung zwischen zwei Offshore-Windenergieeinrichtungen in einfacher Weise zu überwachen, kann gemäß einer weiteren Ausführungsform der Erfindung die Anzahl der in einer Offshore-Windenergieeinrichtung vorgesehenen Parameterbestimmungseinrichtungen mit der Anzahl der an die Offshore-Windenergieeinrichtung angeschlossenen elektrischen Verbindungen übereinstimmen. Mit anderen Worten ist je an eine Offshore-Windenergieeinrichtung angeschlossenes Kabel mindestens eine Parameterbestimmungseinrichtung vorgesehen. Ein Kabel weist mindestens zwei Parameterbestimmungseinrichtungen auf. Insbesondere kann mindestens eine Parameterbestimmungseinrichtung an jeweils einem Ende des Kabels vorgesehen sein. Somit kann für jede elektrische Verbindung die Differenz zwischen einem eingespeisten elektrischen Parameter und einem empfangenen elektrischen Parameter bestimmt werden.

In einer weiteren Ausführungsform der Erfindung kann mindestens eine der Offshore-Windenergieeinrichtungen eine Schaltanlage oder eine Windkraftanlage sein. Vorzugsweise können eine Schaltanlage, insbesondere eine Substation, und eine Mehrzahl von mit der Schaltanlage verbindbaren Windkraftanlagen vorgesehen sein. Die Schaltanlage kann insbesondere ein Umspannwerk umfassen. Von der Schaltanlage kann die erzeugte elektrische Energie über geeignete Seekabel direkt oder über eine Hochspannungs-Gleichstromübertragungsplattform an ein Onshore-Umspannwerk übertragen und von dort ins Netz eingespeist werden. Darüber hinaus kann die Schaltanlage mindestens einen Generator, insbesondere Dieselgenerator, umfassen. Die Dieselgeneratoren ermöglichen es, den Betrieb auch bei einem Verlust der Rückkoppelenergie einer Hochspannungs-Gleichstromübertragungsplattform aufrechtzuerhalten.

Eine Windkraftanlage kann die kinetische Energie des Winds mittels eines Rotors und eines Generators in elektrische Energie umwandeln. Als zusätzlicher Schutz kann zur Überwachung des Generatorstroms ein UMZ-Schutz vorgesehen sein. Übersteigt der Generatorstrom einen vorgebbaren zulässigen Grenzwert für eine vorgebbare Zeitdauer, kann der Generator mittels mindestens einer geeigneten Schaltereinrichtung von der mindestens einen elektrischen Verbindung getrennt werden.

Ferner kann die elektrische Verbindung ein Seekabel, insbesondere ein Hochspannungsseekabel oder ein Mittelspannungsseekabel, sein.

Grundsätzlich kann zur Erhöhung der gewinnbaren Energiemenge eine Vielzahl von Windkraftanlagen vorgesehen sein. Wie bereits beschrieben wurde, können diese in beliebiger Weise miteinander elektrisch verbunden sein. Beispielsweise kann jede Windkraftanlage direkt mit der mindestens einen Schaltanlage verbunden sein. Vorteilhafterweise kann jedoch eine Mehrzahl an Windkraftanlagen zu einem Strang zusammengeschaltet werden.

Gemäß einer Ausführungsform kann eine Mehrzahl von Windkraftanlagen zu einem ersten Strang in Reihe geschaltet sein, wobei die an einem ersten Ende des erstens Strangs angeordnete Windkraftanlage mit der Schaltanlage verbunden sein kann. Ferner kann eine weitere Mehrzahl von Windkraftanlagen zu einem weiteren Strang in Reihe geschaltet sein, wobei die an einem ersten Ende des weiteren Strangs angeordnete Windkraftanlage mit der Schaltanlage verbunden sein kann. Die an dem anderen Ende des ersten Strangs angeordnete Windkraftanlage kann mit der an dem anderen Ende des weiteren Strangs angeordneten Windkraftanlage elektrisch verbindbar sein. Ein Strang, der auch String genannt wird, besteht aus zwei oder mehr elektrisch in Reihe geschalteten Windkraftanlagen. Bevorzugt kann zwischen zwei benachbarten Windkraftanlagen jeweils eine elektrische Verbindung beispielsweise in Form eines Seekabels vorgesehen sein. Die Bildung von Strängen reduziert die Gesamtkabellänge und vereinfacht die Anbindung an eine Schaltanlage. Besonders vorteilhaft ist, wenn die am Ende eines Strangs angeordnete Windkraftanlage im Bedarfsfall mit einer weiteren, bevorzugt einer am Enden eines anderen Strangs angeordneten Windkraftanlage elektrisch verbunden werden kann.

Vorzugsweise können bei einem Strang umfassend mehrere Windkraftanlagen und eine Substation (n*2)-1 Parameterbestimmungseinrichtungen vorgesehen sein, wobei n die Anzahl an Anlagen (incl. Substation) ist.

Gemäß einer bevorzugten Ausführungsform kann mindestens eine weitere Schaltereinrichtung zum Schließen der elektrischen Verbindung zwischen der an dem anderen Ende des ersten Strangs angeordneten Windkraftanlage und der an dem anderen Ende des weiteren Strangs angeordneten Windkraftanlage vorgesehen sein. In einem Regelbetriebszustand kann die weitere Schaltereinrichtung geöffnet sein. Die elektrische Verbindung zwischen der am anderen Ende des ersten Strangs angeordneten Windkraftanlage und der am anderen Ende des weiteren Strangs angeordneten Windkraftanlage ist getrennt. Der Regelbetriebszustand ist insbesondere ein fehlerfreier Zustand. Es liegt also zumindest keine fehlerhafte elektrische Verbindung vor. In einem Störungszustand kann die weitere Schaltereinrichtung geschlossen sein. Ein Störungszustand liegt insbesondere dann vor, wenn eine fehlerhafte elektrische Verbindung und/oder ein zu hoher Generatorstrom detektiert wurde/n. Wie bereits beschrieben wurde, kann eine Störung zu einer Trennung der elektrischen Verbindung führen. Es ist erkannt worden, dass eine Trennung des gesamten Strangs von der Schaltanlage verhindert werden kann, wenn bei einer Trennung einer elektrischen Verbindung die elektrische Verbindung zwischen der am anderen Ende des ersten Strangs angeordneten Windkraftanlage und der am anderen Ende des weiteren Strangs angeordneten Windkraftanlage geschlossen wird.

Zwei Stränge können zusammen mit der Schaltanlage insbesondere einen geöffneten Ring bilden. Im Bedarfsfall, wie bei einer fehlerhaften elektrischen Verbindung, kann der Ring an der geöffneten Stelle geschlossen und an einer anderen Stelle zur Umgehung der fehlerhaften elektrischen Verbindung aufgetrennt werden.

Gemäß einer bevorzugten Ausführungsform kann die Schaltanlage eine Wechselstrom/Gleichstromwandlereinrichtung aufweisen. Alternativ kann die Schaltanlage mit einer Wechselstrom/Gleichstromwandlereinrichtung verbunden sein. Im Gegensatz zu Onshore-Windenergieanlagen ist es bei Offshore-Windenergiesystemen vorteilhaft, den durch die Windkraftanlagen erzeugten Wechselstrom zunächst in Gleichstrom zu wandeln. Eine Hochspannungs-GleichstromÜbertragung ermöglicht insbesondere eine verlustarme Energieübertragung. Problematisch hierbei ist jedoch, dass nur geringe Kurzschlussströme auftreten. Beispielsweise kann ein Kurzschlussstrom in einem Bereich zwischen 0 und 1,8 IN liegen, wobei IN der Nennstrom ist. Dies liegt insbesondere an der Beschaffenheit der Hochspannungs-Gleichstrom-Übertragungsstation. Dieses bei Onshore-Windenergiesystemen nicht auftretende Problem wird dadurch gelöst, dass die zuvor beschriebene Differenzbestimmung zur Detektion einer fehlerhaften elektrischen Verbindung durchgeführt werden kann. Es versteht sich, dass alternativ zu einer Wechselstrom/Gleichstromwandlereinrichtung auch eine Wechselstrom/Wechselstromwandlereinrichtung vorgesehen sein kann.

Für eine zentrale Überwachung von einem oder mehreren Offshore-Windenergiesystem/en kann ferner eine entfernt angeordnete Zentrale vorgesehen sein. Die Zentrale kann sich insbesondere auf dem Festland befinden. Mindestens eine der Offshore-Windenergieeinrichtungen kann eine Kommunikationseinrichtung zur Kommunikation mit der Zentrale aufweisen. Beispielsweise kann jede Windkraftanlage eine Kommunikationseinrichtung zur Kommunikation mit der Schaltanlage aufweisen. Die Schaltanlage kann die empfangenen Informationen dann an die Zentrale direkt oder über eine weitere Zwischenstation weiterleiten. Insbesondere kann in einem Störungsfall eine entsprechende Nachricht an die Zentrale übermittelt werden. Bevorzugt kann die Nachricht Informationen über die Art der Störung bzw. des Fehlers und den Ort der Störung bzw. des Fehlers aufweisen. Von der Zentrale aus können geeignete Maßnahmen zur Fehlerbeseitigung veranlasst werden. Eine Fernüberwachung des Offshore-Windenergiesystems ist möglich.

Ein weiterer Aspekt der Erfindung ist eine Offshore-Windenergieeinrichtung für ein zuvor beschriebenes Offshore-Windenergiesystem. Die Offshore-Windenergieeinrichtung umfasst mindestens eine Parameterbestimmungseinrichtung zum Bestimmen von mindestens einem ersten Parameterwert von mindestens einem Parameter eines an einer elektrischen Verbindung anliegenden elektrischen Signals. Die Parameterbestimmungseinrichtung ist eingerichtet zum Bestimmen einer Differenz zwischen dem ersten bestimmten Parameterwert und eines von einer weiteren Offshore-Windenergieeinrichtung empfangenen Parameterwerts.

Ein noch weiterer Aspekt der Erfindung ist ein Verfahren zum Detektieren einer fehlerhaften elektrischen Verbindung zwischen einer ersten Offshore-Windenergieeinrichtung und einer weiteren Offshore-Windenergieeinrichtung. Das Verfahren umfasst die Schritte:
- Bestimmen von mindestens einem ersten Parameterwert von mindestens einem Parameter eines an einer elektrischen Verbindung auf der Seite der ersten Offshore-Windenergieeinrichtung anliegenden elektrischen Signals,
- Bestimmen von mindestens einem weiteren Parameterwert von dem mindestens einem elektrischen Parameter des an der elektrischen Verbindung auf der Seite der weiteren Offshore-Windenergieeinrichtung anliegenden elektrischen Signals,
- Bestimmen einer Differenz zwischen dem ersten Parameterwert und dem weiteren Parameterwert zum Detektieren einer fehlerhaften elektrischen Verbindung zwischen der ersten Offshore-Windenergieeinrichtung und der weiteren Offshore-Windenergieeinrichtung.

Das Verfahren kann insbesondere in einem zuvor beschriebenen Offshore-Windenergiesystem eingesetzt werden.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Offshore-Windenergiesystem, die erfindungsgemäße Offshore-Windenergieeinrichtung sowie das erfindungsgemäße Verfahren zum Detektieren einer fehlerhaften elektrischen Verbindung zwischen einer ersten Offshore-Windenergieeinrichtung und einer weiteren Offshore-Windenergieeinrichtung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Offshore-Windenergiesystems gemäß der vorliegenden Erfindung;
- Fig. 2: eine weitere schematische Ansicht eines weiteren Ausführungsbeispiels eines Offshore-Windenergiesystems gemäß der vorliegenden Erfindung;
- Fig. 3: eine weitere schematische Ansicht eines weiteren Ausführungsbeispiels eines Offshore-Windenergiesystems gemäß der vorliegenden Erfindung; und
- Fig. 4: ein Flussdiagramm eines Verfahrens zum Detektieren einer fehlerhaften elektrischen Verbindung gemäß der vorliegenden Erfindung.

Nachfolgend werden für gleiche Elemente gleiche Bezugszeichen verwendet.

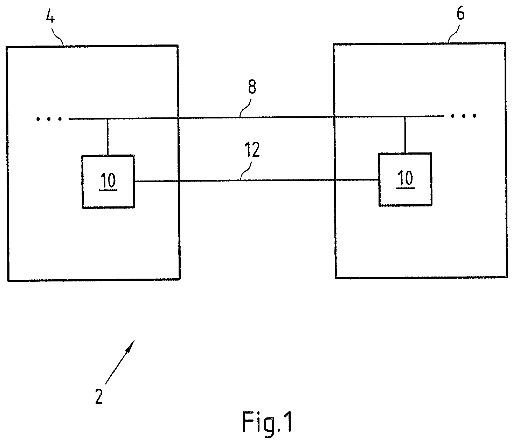

Figur 1 zeigt eine vereinfachte Ansicht eines ersten Ausführungsbeispiels eines Offshore-Windenergiesystems 2, insbesondere eines Offshore-Windkraftanlagenparks, gemäß der vorliegenden Erfindung.

Das dargestellte Offshore-Windenergiesystem 2 umfasst eine erste Offshore-Windenergieeinrichtung 4 und eine weitere Offshore-Windenergieeinrichtung 6. Beispielsweise kann es sich bei der Offshore-Windenergieeinrichtung 4 um eine Schaltanlage 4, wie eine Umspannplattform, handeln. Bei der Offshore-Windenergieeinrichtung 6 kann es sich um eine Offshore-Windkraftanlage 6 handeln.

Wie ferner aus der Figur 1 zu erkennen ist, sind die Offshore-Windenergieeinrichtungen 4 und 6 über eine elektrische Verbindung 8, insbesondere ein Seekabel 8, miteinander verbunden. Die elektrische Verbindung 8 ist insbesondere dazu eingerichtet, die von der Offshore-Windkraftanlage 6 erzeugte elektrische Energie an die weitere Offshore-Windenergieeinrichtung 4 zu übertragen. Vorzugsweise fließt ein Wechselstrom von der Offshore-Windkraftanlage 6 an die Schaltanlage 4.

Ferner weist die erste Offshore-Windenergieeinrichtung 4 eine erste Parameterbestimmungseinrichtung 10 auf. Die Parameterbestimmungseinrichtung 10 ist dazu eingerichtet, den Wert von mindestens einem Parameter des elektrischen Signals, welches an der elektrischen Verbindung 8 auf Seiten der ersten Offshore-Windenergieeinrichtung 4 anliegt, zu bestimmen.

Beispielsweise kann eine Messvorrichtung zum Messen des mindestens einen Parameterwerts vorgesehen sein. Vorzugsweise kann der Strom und/oder die Spannung gemessen werden. Eine Bestimmung des Stroms und der Spannung kann vorteilhaft sein, um fehlerhafte Messungen eines Parameters zu erkennen.

Darüber hinaus weist auch die weitere Offshore-Windenergieeinrichtung 6 eine Parameterbestimmungseinrichtung 10 auf. Die weitere Parameterbestimmungseinrichtung 10 kann vorzugsweise entsprechend der ersten Parameterbestimmungseinrichtung 10 ausgebildet sein. Die weitere Parameterbestimmungseinrichtung 10 ist dazu eingerichtet, den Wert des mindestens einen Parameters des elektrischen Signals zu bestimmen. Mit anderen Worten bestimmen die beiden Parameterbestimmungseinrichtungen 10 den Wert des gleichen Parameters an unterschiedlichen Orten.

Erfindungsgemäß kann beispielsweise der jeweilige Stromwert an beiden Enden der elektrischen Verbindung 8 erfasst werden. Die Differenz kann aus den beiden erfassten Stromwerten bestimmt werden. Auch kann eine Vergleichsoperation durchgeführt werden. Beispielsweise kann zwischen den Parameterbestimmungseinrichtungen 10 ein Kommunikationskanal 12, wie ein drahtgebundener oder drahtloser Kanal, für einen Datenaustausch vorgesehen sein. Ferner kann mindestens eine der Parameterbestimmungseinrichtungen 10 eine Verarbeitungseinrichtung oder dergleichen aufweisen. Bevorzugt können beide Parameterbestimmungseinrichtungen 10 zur Bestimmung der Differenz bzw. Summe eingerichtet sein.

Im störungsfreien (idealen) Betrieb des Offshore-Windenergiesystems 2 sind die Beträge der beiden bestimmten Stromwerte gleich. Eine fehlerhafte elektrische Verbindung 8 liegt insbesondere dann vor, wenn die Differenz bzw. Summe der bestimmten Stromwerte ungleich null ist. Es versteht sich, dass Grenzwerte vorgegeben werden können, um die im realen Betrieb auftretenden Stromverluste der elektrischen Verbindung 8 zu berücksichtigen. Dann kann eine bestimmte Differenz mit der vorgebbaren Differenz verglichen werden, um eine fehlerhafte elektrische Verbindung 8 zu detektieren.

Es versteht sich, dass auch eine separate mit der Parameterbestimmungseinrichtung 10 verbindbare Verarbeitungseinrichtung zur Bestimmung der Differenz der beiden erfassten Parameterwerte vorgesehen sein kann.

In einfacher und sicherer Weise kann in einem Offshore-Windenergiesystem ein fehlerhaftes Kabel auch bei geringen Kurzschlussströmen bestimmt werden.

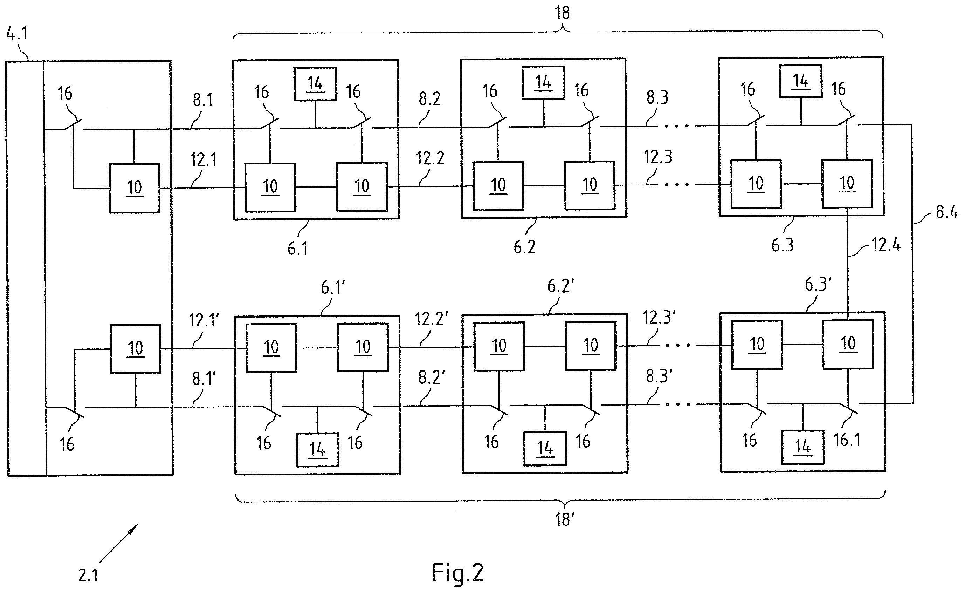

In Figur 2 ist ein weiteres Ausführungsbeispiel eines Offshore-Windenergiesystems 2.1 gemäß der vorliegenden Erfindung dargestellt.

Das Offshore-Windenergiesystem 2.1 umfasst eine Schaltanlage 4.1, insbesondere eine Substation 4.1. Die Substation 4.1 kann eine AC/DC Wandlereinrichtung umfassen oder mit einer weiteren Plattform verbunden sein, welche eine AC/DC Wandlereinrichtung umfasst, um den erzeugten Wechselstrom möglichst verlustarm als Gleichstrom an das Festland zu übertragen.

An der Substation 4.1 können eine Mehrzahl von Strängen 18, 18' bzw. Strings angeordnet sein. Die Stränge 18, 18' umfassen eine Mehrzahl an Windkraftanlagen 6.1 bis 6.3 und 6.1' bis 6.3'. Beispielsweise können acht Stränge mit jeweils sechs Windkraftanlagen vorgesehen sein.

Vorliegend sind zu Gunsten einer besseren Übersicht lediglich zwei Stränge 18, 18' mit jeweils drei Windkraftanlagen 6.1 bis 6.3 bzw. 6.1' bis 6.3' abgebildet. Die Windkraftanlagen 6.1 bis 6.3 des ersten Strangs 18 sind über elektrische Verbindungen 8.1 bis 8.3 in Form von Kabeln 8.1 bis 8.3, insbesondere Seekabeln 8.1 bis 8.3, in Reihe miteinander geschaltet. Über diese elektrischen Verbindungen 8.1 bis 8.3 kann die von den Windkraftanlagen 6.1 bis 6.3 erzeugte elektrische Energie übertragen werden. Insbesondere ist zwischen jeweils zwei benachbarten Windkraftanlagen 6.1 bis 6.3 zumindest ein Seekabel 8.2, 8.3 angeordnet.

Die Windkraftanlagen 6.1' bis 6.3' des weiteren Strangs 18' können in entsprechender Weise miteinander elektrisch verbunden sein.

Die erste Windkraftanlage 6.1 des ersten Strangs 18 ist ferner mit der Substation 4.1 elektrisch verbunden. In entsprechender Weise ist die erste Windkraftanlage 6.1' des weiteren Strangs 18' mit der Substation 4.1 elektrisch verbunden.

Darüber hinaus ist die am (anderen) Ende des erstens Strangs 18 angeordnete Windkraftanlage 6.3 mit der am Ende des weiteren Strangs 18' angeordnete Windkraftanlage 6.3' elektrisch verbindbar.

Sämtliche Windkraftanlagen 6.1 bis 6.3 und 6.1' bis 6.3' können im Wesentlichen gleich ausgebildet sein. Eine Windkraftanlage 6 kann einen Generator 14 aufweisen, der die kinetische Energie des Winds in elektrische Energie wandelt.

Ferner kann eine Windkraftanlage 6 zwei Schaltereinrichtungen 16 und zwei Parameterbestimmungseinrichtungen 10 aufweisen.

Vorzugsweise hängt die Anzahl der Parameterbestimmungseinrichtungen 10 in einer Windkraftanlage 6 von der Anzahl der angeschlossenen elektrischen Verbindungen 8 ab. Beispielsweise können auch drei oder mehr Windkraftanlagen 6 an eine Windkraftanlage 6 oder Schaltanlage 4 über eine entsprechende Anzahl von Kabeln 8 angeschlossen sein, wobei die Windkraftanlage 6 oder Schaltanlage 4 dann entsprechend drei oder mehr Parameterbestimmungseinrichtungen 10 umfasst.

Darüber hinaus können die Parameterbestimmungseinrichtungen 10 miteinander über Kommunikationskanäle 12.1 bis 12.4' miteinander kommunizieren. Insbesondere können zumindest Parameterbestimmungseinrichtungen 10 von benachbarten Offshore-Windenergieeinrichtungen 4, 6 Daten miteinander austauschen. Bevorzugt können zumindest die erfassten Parameterwerte ausgetauscht werden.

Im Regelbetrieb des Offshore-Windenergiesystems 2.1, also im störungsfreien Betrieb, können die Schaltereinrichtungen 16 geschlossen und die Schaltereinrichtungen 16.1 geöffnet sein. Die elektrische Verbindung 8.4 zwischen den am Ende angeordneten Windkraftanlagen 6.3 und 6.3' ist im Regelbetrieb getrennt. Die Stränge 18 und 18' bilden im Regelbetrieb zusammen mit der Schaltanlage 4 einen offenen Ring.

Ein Störungsfall, also beispielsweise eine fehlerhafte elektrische Verbindung 8, kann entsprechend den vorherigen Ausführungen detektiert werden.

Nachfolgend wird beispielsweise davon ausgegangen, dass eine fehlerhafte elektrische Verbindung 8.2 zwischen den Windkraftanlagen 6.1 und 6.2 von mindestens einer Parameterbestimmungseinrichtung 10 detektiert wurde. Die Parameterbestimmungseinrichtung 10 kann zumindest eingerichtet sein, um die an den Enden der elektrischen Verbindung 8.2 angeordneten zwei Schaltereinrichtungen 16 anzusteuern und insbesondere zu öffnen. Die elektrische Verbindung 8.2 wird unterbrochen. Aus Sicherheitsgründen können auch die beiden anderen Schalter 16 der benachbarten Windkraftanlagen 6.1 und 6.2 angesteuert werden, so dass die Windkraftanlagen 6.1 und 6.2 abgetrennt werden.

Um die fehlerfrei arbeitende Windkraftanlage 6.3 weiter betreiben zu können, können die Schalter 16.1 geschlossen und eine elektrische Verbindung 8.4 zwischen den am Ende der Stränge 18, 18' angeordneten Windkraftanlagen 6.3 und 6.3' hergestellt werden.

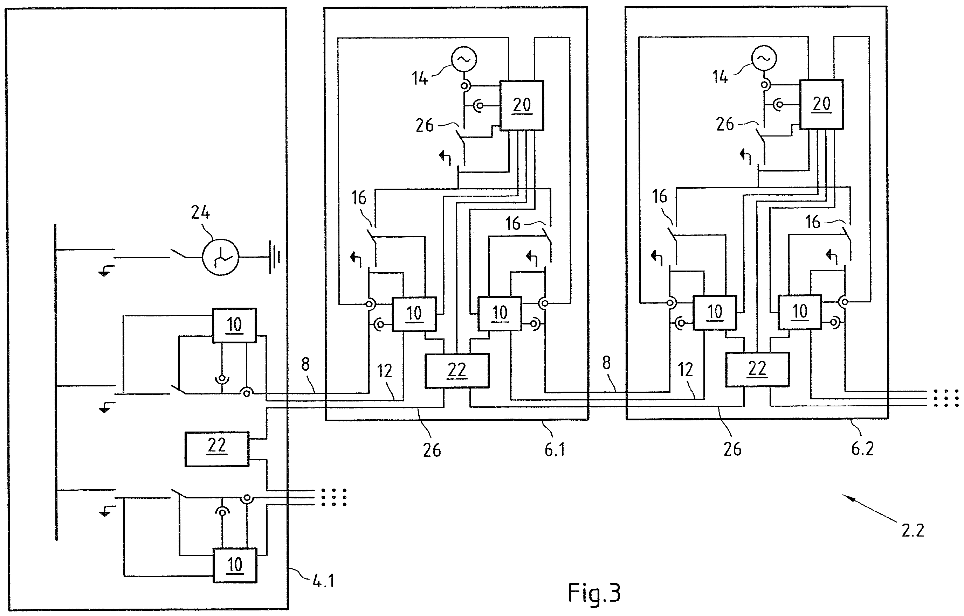

Figur 3 zeigt eine weitere schematische Ansicht eines weiteren Ausführungsbeispiels eines Offshore-Windenergiesystems 2.2 gemäß der vorliegenden Erfindung. Insbesondere sind die Offshore-Windenergieeinrichtungen 4.1, 6.1 und 6.2 detaillierter dargestellt.

Die Schaltanlage 4.1 kann mindestens einen Sternpunktbildner 24 aufweisen. Es versteht sich, dass gemäß anderen Varianten der Erfindung auch kein Sternpunktbildner oder zwei oder mehr Sternpunktbildner vorgesehen sein können. Mit der Schaltanlage 4.1 kann eine AC/DC Plattform zur Hochspannungs-Gleichstrom Übertragung verbunden sein.

Ferner sind zwei Kommunikationskanäle 12 und 26 und Schaltelemente 22 vorgesehen. Ein Schaltelement 22 kann einen Logikbaustein umfassen und insbesondere dazu eingerichtet sein, Daten weiterzuleiten.

Darüber hinaus ist ein UMZ-Schutz 20 vorgesehen. Der UMZ-Schutz erlaubt die Detektion eines unzulässigen Generatorstroms. Wird ein unzulässiger Generatorstrom bei einem Generator 14 detektiert, kann die Schaltereinrichtung 26 angesteuert und geöffnet werden. Darüber hinaus können die Parameterbestimmungseinrichtungen und/oder das Schaltelement 22 benachrichtigt werden. Die Daten können über die Schaltanlage 4.1 an eine nicht dargestellte Zentrale übermittelt werden.

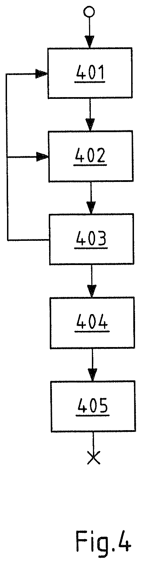

Figur 4 zeigt ein Flussdiagram eines Verfahrens zum Detektieren einer fehlerhaften elektrischen Verbindung zwischen zwei Offshore-Windenergieeinrichtungen 4, 6.

Die elektrische Verbindung ist beispielsweise zwischen zwei Windkaftanlagen 6 angeordnet. An den jeweiligen Anschlusspunkten des Kabels 8 in den Offshore-Windenergieeinrichtungen 6 ist jeweils eine Parameterbestimmungseinrichtung 10 vorgesehen.

In einem ersten Schritt 401 bestimmt eine erste Parameterbestimmungseinrichtung 10 einen Parameterwert, beispielsweise den (aktuellen) Strom- und/oder Spannungswert des elektrischen Signals auf der Seite der ersten Offshore-Windenergieeinrichtung 6.

In einem zweiten Schritt 402, der bevorzugt parallel zum ersten Schritt 401 durchgeführt werden kann, bestimmt eine weitere Parameterbestimmungseinrichtung 10 den gleichen Parameterwert, beispielsweise den (aktuellen) Strom- und/oder Spannungswert des elektrischen Signals auf der Seite der weiteren Offshore-Windenergieeinrichtung 6. Vorzugsweise können die Schritte 401 und 402 jeweils kontinuierlich oder in vorgebbaren Zeitabständen durchgeführt werden. Die beiden Parameterbestimmungseinrichtungen 10 können insbesondere miteinander synchronisiert sein. Die Synchronisation kann vor der Inbetriebnahme und/oder während des Betriebs (regelmäßig) durchgeführt werden.

Insbesondere können der Stromwert eines in das Kabel 8 eingespeisten Stroms und der Stromwert des am Ende des Kabels übertragenen Stroms bestimmt werden.

In einem nächsten Schritt 403 kann die Differenz der bestimmten Stromwerte gebildet werden. Beispielsweise kann zwischen den Parameterbestimmungseinrichtungen 10 ein Kommunikationskanal 12 vorgesehen sein, um die jeweils erfassten Parameterwerte auszutauschen.

Zumindest eine der Parameterbestimmungseinrichtungen 10 ist dazu eingerichtet, die Stromwerte miteinander zu vergleichen und die Differenz zu bestimmen. Wenn die Differenz der beiden Stromwerte unterhalb einer vorgebbaren zulässigen Abweichung liegt, dann kann mit den Schritten 401 und 402 fortgesetzt werden.

Wird hingegen eine nicht zulässige Abweichung detektiert, liegt ein fehlerhaftes Stromkabel 8 vor. In diesem Störungsfall steuert zumindest eine der Parameterbestimmungseinrichtungen 10, bevorzugt beide Parameterbestimmungseinrichtungen 10, eine oder mehrere Schaltereinrichtungen 16 an, um die elektrische Verbindung 8 zwischen den beiden Offshore-Windenergieeinrichtungen 4, 6 zu trennen (Schritt 404).

Bei einem Windenergiesystem 2.1 gemäß Figur 2 werden die beiden durch das defekte Kabel 8 verbundenen Windkraftanlagen 6 abgekoppelt. Um die übrigen Windkraftanlagen 6 insbesondere des Strangs 18, in der sich das defekte Kabel 8 befindet, weiter zu betreiben, wird ferner im Schritt 404 eine elektrische Verbindung 8.4 zwischen der am Ende des ersten Strangs 18 angeordneten Windkraftanlage 6.3 und der am Ende des weiteren Strangs 18' angeordneten Windkraftanlage 6.3' durch ein Schließen der Schaltereinrichtungen 16.1 hergestellt.

In einem weiteren Schritt 405 kann die Detektion einer defekten elektrischen Verbindung an eine Zentrale, die sich beispielsweise auf dem Festland befinden kann, gemeldet werden. Insbesondere kann die Art des Fehlers und der Ort des Fehlers übertragen werden. Die Zentrale kann dann geeignete Maßnahmen zur Beseitigung der Störung ergreifen.

## Patentansprüche

1. Offshore-Windenergiesystem (2, 2.1, 2.2) mit
- einer ersten Offshore-Windenergieeinrichtung (4, 4.1, 6, 6.1, 6.1', 6.2, 6.2', 6.3, 6.3') und
- mindestens einer weiteren Offshore-Windenergieeinrichtung (4, 4.1, 6, 6.1, 6.1', 6.2, 6.2', 6.3, 6.3'), wobei zur Übertragung eines elektrischen Signals mindestens eine elektrische Verbindung (8, 8.1, 8.1', 8.2, 8.2', 8.3, 8.3') zwischen der ersten Offshore-Windenergieeinrichtung (4, 4.1, 6, 6.1, 6.1', 6.2, 6.2', 6.3, 6.3') und der weiteren Offshore-Windenergieeinrichtung (4, 4.1, 6, 6.1, 6.1', 6.2, 6.2' , 6.3, 6.3') vorgesehen ist,
- die erste Offshore-Windenergieeinrichtung (4, 4.1, 6, 6.1, 6.1', 6.2, 6.2', 6.3, 6.3') mindestens eine erste Parameterbestimmungseinrichtung (10) zum Bestimmen von mindestens einem ersten Parameterwert von mindestens einem Parameter des elektrischen Signals aufweist, **dadurch gekennzeichnet, dass**
- die weitere Offshore-Windenergieeinrichtung (4, 4.1, 6, 6.1, 6.1', 6.2, 6.2', 6.3, 6.3') mindestens eine weitere Parameterbestimmungseinrichtung (10) zum Bestimmen von mindestens einem weiteren Parameterwert von dem mindestens einem Parameter des elektrischen Signals aufweist, und
- mindestens eine der Parameterbestimmungseinrichtungen (10) zum Bestimmen einer Differenz zwischen dem ersten Parameterwert und dem weiteren Parameterwert eingerichtet ist.

2. Offshore-Windenergiesystem (2, 2.1, 2.2) nach Anspruch 1, **dadurch gekennzeichnet, dass**
- mindestens eine Schaltereinrichtung (16) zum Trennen der mindestens einen elektrischen Verbindung (8, 8.1, 8.1' , 8.2, 8.2' , 8.3, 8.3') vorgesehen ist,
- mindestens eine Parameterbestimmungseinrichtung (10) zum Vergleichen der bestimmten Differenz mit einer vorgebbaren Differenz eingerichtet ist, und
- die Parameterbestimmungseinrichtung (10) eingerichtet ist, bei Überschreiten der vorgebbaren Differenz die mindestens eine Schaltereinrichtung (16) anzusteuern, derart, dass die elektrische Verbindung (8, 8.1, 8.1', 8.2, 8.2', 8.3, 8.3') zwischen der ersten Offshore-Windenergieeinrichtung (4, 4.1, 6, 6.1, 6.1', 6.2, 6.2', 6.3, 6.3') und der weiteren Offshore-Windenergieeinrichtung (4, 4.1, 6, 6.1, 6.1', 6.2, 6.2', 6.3, 6.3') getrennt wird.

3. Offshore-Windenergiesystem (2, 2.1, 2.2) nach Anspruch 1 oder 2, **dadurch gekennzeichnet, dass** die Anzahl der in einer Offshore-Windenergieeinrichtung (4, 4.1, 6, 6.1, 6.1', 6.2, 6.2', 6.3, 6.3') vorgesehenen Parameterbestimmungseinrichtungen (10) mit der Anzahl der an die Offshore-Windenergieeinrichtung (4, 4.1, 6, 6.1, 6.1', 6.2, 6.2', 6.3, 6.3') angeschlossenen elektrischen Verbindungen (8, 8.1, 8.1', 8.2, 8.2', 8.3, 8.3') übereinstimmt.

4. Offshore-Windenergiesystem (2, 2.1, 2.2) nach einem der vorherigen Ansprüche, **dadurch gekennzeichnet, dass**
- mindestens eine der Offshore-Windenergieeinrichtungen (4, 4.1, 6, 6.1, 6.1', 6.2, 6.2', 6.3, 6.3') eine Schaltanlage (4, 4.1) oder eine Windkraftanlage (6, 6.1, 6.1' , 6.2, 6.2' , 6.3, 6.3') ist,
und/oder
- die elektrische Verbindung (8, 8.1, 8.1', 8.2, 8.2', 8.3, 8.3') ein Seekabel (8, 8.1, 8.1', 8.2, 8.2', 8.3, 8.3'), insbesondere ein Hochspannungsseekabel (8, 8.1, 8.1', 8.2, 8.2', 8.3, 8.3') oder ein Mittelspannungsseekabel (8, 8.1, 8.1', 8.2, 8.2', 8.3, 8.3'), ist.

5. Offshore-Windenergiesystem (2, 2.1, 2.2) nach Anspruch 4, **dadurch gekennzeichnet, dass**
- eine Mehrzahl von Windkraftanlagen (6.1, 6.2, 6.3) zu einem ersten Strang (18) in Reihe geschaltet ist, wobei die an einem ersten Ende des erstens Strangs (18) angeordnete Windkraftanlage (6.1) mit der Schaltanlage (4.1) verbunden ist,
- eine weitere Mehrzahl von Windkraftanlagen (6.1', 6.2', 6.3') zu einem weiteren Strang (18') in Reihe geschaltet ist, wobei die an einem ersten Ende des weiteren Strangs (18') angeordnete Windkraftanlage (6.1') mit der Schaltanlage (4.1) verbunden ist, und
- die an dem anderen Ende des ersten Strangs (18) angeordnete Windkraftanlage (6.3) mit der an dem anderen Ende des weiteren Strangs (18') angeordneten Windkraftanlagen (6.3') elektrisch verbindbar ist.

6. Offshore-Windenergiesystem (2, 2.1, 2.2) nach Anspruch 5, **dadurch gekennzeichnet, dass**
- mindestens eine weitere Schaltereinrichtung (16.1) zum Schließen der elektrischen Verbindung (8.4) zwischen der an dem anderen Ende des ersten Strangs (18) angeordneten Windkraftanlage (6.3) und der am anderen Ende des weiteren Strangs (18') angeordneten Windkraftanlage (6.3') vorgesehen ist, wobei
- in einem Regelbetriebszustand die weitere Schaltereinrichtung (16.1) geöffnet ist, und
- in einem Störungszustand die weitere Schaltereinrichtung (16.1) geschlossen ist.

7. Offshore-Windenergiesystem (2, 2.1, 2.2) nach Anspruch 4, **dadurch gekennzeichnet, dass**
- die Schaltanlage (4, 4.1) eine Wechselstrom/Gleichstromwandlereinrichtung aufweist,
oder
- die Schaltanlage (4, 4.1) mit einer Wechselstrom/Gleichstromwandlereinrichtung verbunden ist.

8. Offshore-Windenergiesystem (2, 2.1, 2.2) nach einem der vorherigen Ansprüche, **dadurch gekennzeichnet, dass**
- eine entfernt angeordnete Zentrale vorgesehen ist, und
- mindestens eine der Offshore-Windenergieeinrichtungen (4, 4.1, 6, 6.1, 6.1', 6.2, 6.2', 6.3, 6.3') eine Kommunikationseinrichtung zur Kommunikation mit der Zentrale aufweist.

9. Offshore-Windenergieeinrichtung (4, 4.1, 6, 6.1, 6.1', 6.2, 6.2', 6.3, 6.3') für ein Offshore-Windenergiesystem (2, 2.1, 2.2) nach einen der vorherigen Ansprüche, umfassend:
- mindestens eine Parameterbestimmungseinrichtung (10) zum Bestimmen von mindestens einem ersten Parameterwert von mindestens einem Parameter eines an einer elektrischen Verbindung (8, 8.1, 8.1', 8.2, 8.2', 8.3, 8.3') anliegenden elektrischen Signals, wobei
- die Parameterbestimmungseinrichtung (10) zum Bestimmen einer Differenz zwischen dem ersten bestimmten Parameterwert und eines von einer weiteren Offshore-Windenergieeinrichtung (4, 4.1, 6, 6.1, 6.1', 6.2, 6.2', 6.3, 6.3') empfangenen Parameterwerts eingerichtet ist.

10. Verfahren zum Detektieren einer fehlerhaften elektrischen Verbindung (8, 8.1, 8.1', 8.2, 8.2', 8.3, 8.3') innerhalb eines Offshore-Windenergiesystems gemäß einem der Ansprüche 1-9 zwischen einer ersten Offshore-Windenergieeinrichtung (4, 4.1, 6, 6.1, 6.1', 6.2, 6.2', 6.3, 6.3') und einer weiteren Offshore-Windenergieeinrichtung (4, 4.1, 6, 6.1, 6.1', 6.2, 6.2', 6.3, 6.3'), umfassend:
- Bestimmen von mindestens einem ersten Parameterwert von mindestens einem Parameter eines an einer elektrischen Verbindung (8, 8.1, 8.1', 8.2, 8.2', 8.3, 8.3') auf der Seite der ersten Offshore-Windenergieeinrichtung (4, 4.1, 6, 6.1, 6.1', 6.2, 6.2', 6.3, 6.3') anliegenden elektrischen Signals,
- Bestimmen von mindestens einem weiteren Parameterwert von dem mindestens einem elektrischen Parameter des an der elektrischen Verbindung (8, 8.1, 8.1', 8.2, 8.2', 8.3, 8.3') auf der Seite der weiteren Offshore-Windenergieeinrichtung (4, 4.1, 6, 6.1, 6.1', 6.2, 6.2', 6.3, 6.3') anliegenden elektrischen Signals,
- Bestimmen einer Differenz zwischen dem ersten Parameterwert und dem weiteren Parameterwert zum Detektieren einer fehlerhaften elektrischen Verbindung (8, 8.1, 8.1', 8.2, 8.2', 8.3, 8.3') zwischen der ersten Offshore-Windenergieeinrichtung (4, 4.1, 6, 6.1, 6.1' , 6.2, 6.2', 6.3, 6.3') und der weiteren Offshore-Windenergieeinrichtung (4, 4.1, 6, 6.1, 6.1', 6.2, 6.2', 6.3, 6.3').

## Claims

1. An offshore wind energy system (2, 2.1, 2.2) with
- a first offshore wind energy device (4, 4.1, 6, 6.1, 6.1', 6.2, 6.2', 6.3, 6.3') and
- at least one further offshore wind energy device (4, 4.1, 6, 6.1, 6.1', 6.2, 6.2', 6.3, 6.3'), wherein for the transmission of an electrical signal at least one electrical connection (8, 8.1, 8.1', 8.2, 8.2', 8.3, 8.3') is provided between the first offshore wind energy device (4, 4.1, 6, 6.1, 6.1', 6.2, 6.2' , 6.3, 6.3') and the further offshore wind energy device (4, 4.1, 6, 6.1, 6.1', 6.2, 6.2', 6.3, 6.3'),
- the first offshore wind energy device (4, 4.1, 6, 6.1, 6.1', 6.2, 6.2', 6.3, 6.3') comprises at least a first parameter determining device (10) for determining at least a first parameter value of at least one parameter of the electrical signal,
**characterized in that**
- the further offshore wind energy device (4, 4. 6.1, 6.1', 6.2, 6.2', 6.3, 6.3') comprises at least one further parameter determining device (10) for determining at least one further parameter value of the at least one parameter of the electrical signal, and
- at least one of the parameter determining devices (10) is configured to determine a difference between the first parameter value and the further parameter value.

2. The offshore wind energy system (2, 2.1, 2.2) according to Claim 1,
**characterized in that**
- at least one switch device (16) is provided for separating the at least one electrical connection (8, 8.1, 8.1', 8.2, 8.2', 8.3, 8.3'),
- at least one parameter determining device (10) is configured to compare the determined difference to a presettable difference, and
- the parameter determining device (10) is configured, on exceeding of the presettable difference, to actuate the at least one switch device (16), such that the electrical connection (8, 8.1, 8.1', 8.2, 8.2', 8.3, 8.3') between the first offshore wind energy device (4, 4.1, 6, 6.1, 6.1', 6.2, 6.2', 6.3, 6.3') and the further offshore wind energy device (4, 4.1, 6, 6.1, 6.1', 6.2, 6.2', 6.3, 6.3') is separated.

3. The offshore wind energy system (2, 2.1, 2.2) according to Claim 1 or 2, **characterized in that** the number of parameter determining devices (10) provided in an offshore wind energy device (4, 4.1, 6, 6.1, 6.1' ,6.2, 6.2' , 6.3, 6.3') coincides with the number of electrical connections (8, 8.1, 8.1', 8.2, 8.2', 8.3, 8.3') connected to the offshore wind energy device (4, 4.1, 6, 6.1, 6.1', 6.2, 6.2', 6.3, 6.3').

4. The offshore wind energy system (2, 2.1, 2.2) according to one of the preceding claims,
**characterized in that**
- at least one of the offshore wind energy devices (4, 4.1, 6, 6.1, 6.1', 6.2, 6.2', 6.3, 6.3') is a switching station (4, 4.1) or a wind power station (6, 6.1', 6.2, 6.2', 6.3, 6.3'),
and/or
- the electrical connection (8, 8.1, 8.1', 8.2, 8.2', 8.3, 8.3') is an undersea cable (8. 8.1, 8.1', 8.2, 8.2', 8.3, 8.3'), in particular a high-voltage undersea cable (8, 8.1, 8.1', 8.2, 8.2', 8.3, 8.3') or a medium voltage undersea cable (8, 8.1, 8.1', 8.2, 8.2', 8.3, 8.3').

5. The offshore wind energy system (2, 2.1, 2.2) according to Claim 4,
**characterized in that**
- a plurality of wind power stations (6.1, 6.2, 6.3) is connected in series to a first string (18), wherein the wind power station (6.1) arranged at a first end of the first line (18) is connected to the switching station (4.1),
- a further plurality of wind power stations (6.1', 6.2', 6.3') is connected in series to a further string (18'), wherein the wind power station (6.1') arranged at a first end of the further string (18') is connected to the switching station (4.1), and
- the wind power station (6.3) arranged at the other end of the first string (18) is electrically connectable to the wind power station (6.3') arranged at the other end of the further string (18').

6. The offshore wind energy system (2, 2.1, 2.2) according to Claim 5,
**characterized in that**
- at least one further switch device (16.1) is provided for closing the electrical connection (8.4) between the wind power station (6.3) arranged at the other end of the first string (18) and the wind power station (6.3') arranged at the other end of the further string (18'), wherein
- in a normal operating state, the further switch device (16.1) is open, and
- in a fault state, the further switch device (16.1) is closed.

7. The offshore wind energy system (2, 2.1, 2.2) according to Claim 4,
**characterized in that**
- the switching station (4, 4.1) comprises an alternating current/direct current converter device,
or
- the switching station (4, 4.1) is connected to an alternating current/direct current converter device.

8. The offshore wind energy system (2, 2.1, 2.2) according to one of the preceding claims,
**characterized in that**
- a remotely arranged control centre is provided, and
- at least one of the offshore wind energy devices (4, 4.1, 6, 6.1, 6.1', 6.2, 6.2', 6.3, 6.3') comprises a communication device for communication with the control centre.

9. An offshore wind energy device (4, 4.1, 6, 6.1, 6.1', 6.2, 6.2', 6.3, 6.3') for an offshore wind energy system (2, 2.1, 2.2) according to one of the preceding claims, comprising:
- at least one parameter determining device (10) for determining at least a first parameter value of at least one parameter of an electrical signal applied at an electrical connection (8, 8.1, 8.1', 8.2, 8.2', 8.3, 8.3'), wherein
- the parameter determining device (10) is configured to determine a difference between the first determined parameter value and a parameter value received by a further offshore wind energy device (4, 4.1, 6, 6.1, 6.1', 6.2, 6.2', 6.3, 6.3').

10. A method for detecting a faulty electrical connection (8, 8.1, 8.1', 8.2, 8.2', 8.3, 8.3') within an offshore wind energy system according to one of Claims 1-9 between a first offshore wind energy device (4, 4.1, 6, 6.1, 6.1', 6.2, 6.2', 6.3, 6.3') and a further offshore wind energy device (4, 4.1, 6, 6.1, 6.1', 6.2, 6.2', 6.3, 6.3'), comprising:
- determining at least a first parameter value of at least one parameter of an electrical signal applied at an electrical connection (8, 8.1, 8.1', 8.2, 8.2', 8.3, 8.3') on the side of the first offshore wind energy device (4, 4.1, 6, 6.1, 6.1', 6.2, 6.2', 6.3, 6.3'),
- determining of at least one further parameter value of the at least one electrical parameter of the electrical signal applied at the electrical connection (8, 8.1, 8.1', 8.2, 8.2', 8.3, 8.3') on the side of the further offshore wind energy device (4, 4.1, 6, 6.1, 6.1', 6.2, 6.2', 6.3, 6.3'),
- determining a difference between the first parameter value and the further parameter value for detecting a faulty electrical connection (8, 8.1, 8.1', 8.2, 8.2', 8.3, 8.3') between the first offshore wind energy device (4, 4.1, 6, 6.1, 6.1', 6.2, 6.2', 6.3, 6.3') and the further offshore wind energy device (4, 4.1, 6, 6.1, 6.1', 6.2, 6.2', 6.3, 6.3').

## Revendications

1. Système d'énergie éolienne en mer (2, 2.1, 2.2) pourvu
- d'un premier dispositif d'énergie éolienne en mer (4, 4.1, 6, 6.1, 6.1', 6.2, 6.2', 6.3, 6.3') et
- d'au moins un autre dispositif d'énergie éolienne en mer (4, 4.1, 6, 6.1, 6.1', 6.2, 6.2', 6.3, 6.3'), auquel cas l'on prévoit pour la transmission d'un signal électrique au moins une connexion électrique (8, 8.1, 8.1', 8.2, 8.2', 8.3, 8.3') entre le premier dispositif d'énergie éolienne en mer (4, 4.1, 6, 6.1, 6.1', 6.2, 6.2', 6.3, 6.3') et l'autre dispositif d'énergie éolienne en mer (4, 4.1, 6, 6.1, 6.1', 6.2, 6.2', 6.3, 6.3'),
- le premier dispositif d'énergie éolienne en mer (4, 4.1, 6, 6.1, 6.1', 6.2, 6.2', 6.3, 6.3') présente au moins un premier moyen de détermination de paramètres (10) permettant de déterminer au moins une première valeur de paramètre d'au moins un paramètre du signal électrique,
**caractérisé en ce que**
- l'autre dispositif d'énergie éolienne en mer (4, 4.1, 6, 6.1, 6.1', 6.2, 6.2', 6.3, 6.3') présente au moins un autre moyen de détermination de paramètres (10) permettant de déterminer au moins une autre valeur de paramètre d'au moins un paramètre du signal électrique, et
- au moins un des moyens de détermination de paramètres (10) est mis en place afin de déterminer une différence entre la première valeur de paramètre et l'autre valeur de paramètre.

2. Système d'énergie éolienne en mer (2, 2.1, 2.2) selon la revendication 1, **caractérisé en ce que**
- l'on prévoit au moins un dispositif de commutation (16) permettant de déconnecter la au moins une connexion électrique (8, 8.1, 8.1', 8.2, 8.2', 8.3, 8.3'),
- au moins un moyen de détermination de paramètres (10) permettant de comparer la différence définie avec une différence prédéfinie est mis en place, et
- le moyen de détermination de paramètres (10) est mis en place, lors du dépassement de la différence prédéfinie, afin de régler le au moins un dispositif de commutation (16) de telle sorte à déconnecter la connexion électrique (8, 8.1, 8.1', 8.2, 8.2', 8.3, 8.3') entre le premier dispositif d'énergie éolienne en mer (4, 4.1, 6, 6.1, 6.1', 6.2, 6.2', 6.3, 6.3') et l'autre dispositif d'énergie éolienne en mer (4, 4.1, 6, 6.1, 6.1', 6.2, 6.2', 6.3, 6.3').

3. Système d'énergie éolienne en mer (2, 2.1, 2.2) selon la revendication 1 ou 2, **caractérisé en ce que** le nombre des moyens de détermination de paramètres (10) prévus dans un dispositif d'énergie éolienne en mer (4, 4.1, 6, 6.1, 6.1', 6.2, 6.2', 6.3, 6.3') correspond au nombre des connexions électriques (8, 8.1, 8.1', 8.2, 8.2', 8.3, 8.3') connectées au dispositif d'énergie éolienne en mer (4, 4.1, 6, 6.1, 6.1', 6.2, 6.2', 6.3, 6.3').

4. Système d'énergie éolienne en mer (2, 2.1, 2.2) selon une des revendications précédentes, **caractérisé en ce que**
- au moins un des dispositifs d'énergie éolienne en mer (4, 4.1, 6, 6.1, 6.1', 6.2, 6.2', 6.3, 6.3') est une installation de commutation (4, 4.1) ou une installation d'énergie éolienne (6, 6.1, 6.1', 6.2, 6.2', 6.3, 6.3'), et/ou
- la connexion électrique (8, 8.1, 8.1', 8.2, 8.2', 8.3, 8.3') est un câble sous-marin (8, 8.1, 8.1', 8.2, 8.2', 8.3, 8.3'), en particulier un câble sous-marin à haute tension (8, 8.1, 8.1', 8.2, 8.2', 8.3, 8.3') ou un câble sous-marin à moyenne tension (8, 8.1, 8.1', 8.2, 8.2', 8.3, 8.3').

5. Système d'énergie éolienne en mer (2, 2.1, 2.2) selon la revendication 4, **caractérisé en ce que**
- de multiples installations d'énergie éolienne (6.1, 6.2, 6.3) sont connectées en série en une première chaîne (18), auquel cas l'installation d'énergie éolienne (6.1) agencée au niveau d'une première extrémité de la première chaîne (18) est reliée à l'installation de commutation (4.1),
- d'autres multiples installations d'énergie éolienne (6.1', 6.2', 6.3') sont connectées en série en une autre chaîne (18'), auquel cas l'installation d'énergie éolienne (6.1') agencée au niveau d'une première extrémité de l'autre chaîne (18') est reliée à l'installation de commutation (4.1), et
- l'installation d'énergie éolienne (6.3) agencée au niveau de l'autre extrémité de la première chaîne (18) est susceptible de pouvoir être reliée électriquement à l'installation d'énergie éolienne (6.3') agencée au niveau de l'autre extrémité de l'autre chaîne (18').

6. Système d'énergie éolienne en mer (2, 2.1, 2.2) selon la revendication 5, **caractérisé en ce que**
- l'on prévoit au moins un autre dispositif de commutation (16.1) permettant de fermer la connexion électrique (8.4) entre l'installation d'énergie éolienne (6.3) agencée au niveau de l'autre extrémité de la première chaîne (18) et l'installation d'énergie éolienne (6.3') agencée au niveau de l'autre extrémité de l'autre chaîne (18') auquel cas
- dans un état de fonctionnement en série l'autre dispositif de commutation (16.1) est ouvert, et
- dans un état défectueux l'autre dispositif de commutation (16.1) est fermé.

7. Système d'énergie éolienne en mer (2, 2.1, 2.2) selon la revendication 4, **caractérisé en ce que**
- l'installation de commutation (4, 4.1) présente un dispositif convertisseur courant continu/courant alternatif, ou
- l'installation de commutation (4, 4.1) est reliée à un dispositif convertisseur courant continu/courant alternatif.

8. Système d'énergie éolienne en mer (2, 2.1, 2.2) selon une des revendications précédentes, **caractérisé en ce que**
- l'on prévoit une centrale étant située éloignée, et
- au moins un des dispositifs d'énergie éolienne en mer (4, 4.1, 6, 6.1, 6.1', 6.2, 6.2', 6.3, 6.3') présente un dispositif de communication pouvant communiquer avec la centrale.

9. Dispositif d'énergie éolienne en mer (4, 4.1, 6, 6.1, 6.1', 6.2, 6.2', 6.3, 6.3') pour un système d'énergie éolienne en mer (2, 2.1, 2.2) selon une des revendications précédentes, comportant :
- au moins un moyen de détermination de paramètres (10) permettant de déterminer une première valeur de paramètre d'au moins un paramètre d'un signal électrique appliqué sur une connexion électrique (8, 8.1, 8.1', 8.2, 8.2', 8.3, 8.3'), auquel cas
- le moyen de détermination de paramètres (10) permettant de déterminer une différence entre la première valeur de paramètre définie et une valeur de paramètre reçue par un autre dispositif d'énergie éolienne (4, 4.1, 6, 6.1, 6.1', 6.2, 6.2', 6.3, 6.3') est mis en place.

10. Procédé de détection d'une mauvaise connexion électrique (8, 8.1, 8.1', 8.2, 8.2', 8.3, 8.3') au sein d'un système d'énergie éolienne en mer, conformément à une des revendications de 1 à 9, entre un premier dispositif d'énergie éolienne en mer (4, 4.1, 6, 6.1, 6.1', 6.2, 6.2', 6.3, 6.3') et un autre dispositif d'énergie éolienne en mer (4, 4. 1, 6, 6.1, 6.1', 6.2, 6.2', 6.3, 6.3'), comportant :
- la détermination d'au moins une première valeur de paramètre d'au moins un paramètre d'un signal électrique appliqué sur une connexion électrique (8, 8.1, 8.1', 8.2, 8.2', 8.3, 8.3') du côté du premier dispositif d'énergie éolienne (4, 4.1, 6, 6.1, 6.1', 6.2, 6.2', 6.3, 6.3'),
- la détermination d'au moins une autre valeur de paramètre d'au moins un paramètre électrique du signal électrique appliqué sur la connexion électrique (8, 8.1, 8.1', 8.2, 8.2', 8.3, 8.3') du côté de l'autre dispositif d'énergie éolienne (4, 4.1, 6, 6.1, 6.1', 6.2, 6.2', 6.3, 6.3'),
- la détermination d'une différence entre la première valeur de paramètre et l'autre valeur de paramètre afin de détecter une mauvaise connexion électrique (8, 8.1, 8.1', 8.2, 8.2', 8.3, 8.3') entre le premier dispositif d'énergie éolienne en mer (4, 4.1, 6, 6.1, 6.1', 6.2, 6.2', 6.3, 6.3') et l'autre dispositif d'énergie éolienne en mer (4, 4.1, 6, 6.1, 6.1', 6.2, 6.2', 6.3, 6.3').
